# EUROPÄISCHE PATENTANMELDUNG

(11) **EP 4 818 594 A1**
(43) Veröffentlichungstag der Anmeldung: **07.10.2026**
(21) Anmeldenummer: 26162855.6
(22) Anmeldetag: 06.03.2026
(51) Int. Cl.: F24S 25/10, F24S 25/13, F24S 25/16, F24S 25/61, F24S 25/65, H02S 20/24, F24S 25/00, F24S 25/60, F24S 25/70

(54) **VORRICHTUNG ZUR MONTAGE VON SOLARPANELS**

(30) Priorität: 03.04.2025 AT 600722025
(71) Anmelder: Traxler, Manfred, 4614 Marchtrenk (AT)
(72) Erfinder: Traxler, Manfred, 4614 Marchtrenk (AT)
(74) Vertreter: Burgstaller, Peter

(57) **Zusammenfassung**

Die Erfindung betrifft eine Vorrichtung zur Montage von Solarpanels (12), wobei die Vorrichtung mehrere Querträger (2) umfasst, wobei immer ein Paar von Querträgern (2) an seinem oberen Ende über ein Scharniergelenk verbunden ist und die Querträger (2) des Paares an ihren beiden unteren Enden über jeweils ein Scharniergelenk mit Befestigungselementen (3) verbunden sind, wobei die unteren Enden der Querträger (2) mit den Befestigungselementen (3) an Längsträgern (1) befestigt sind, wobei der Neigungswinkel des Paares der Querträger (2) über den Abstand der Längsträger (1) vorgegeben ist, an dem das Paar befestigt ist, wobei in Längsrichtung der Längsträger (1) zumindest zwei Paare von Querträgern (2) vorliegt, wobei an den zwei Paaren von Querträgern (2) zwei Solarpanels (12) befestigbar sind.

## Beschreibung

Die Erfindung betrifft eine Vorrichtung zur Montage von Solarpanels, insbesondere auf Flachdächern.

Die EP 2843320 A1 betrifft eine scherenartig ausziehbare Reihe von Solarpanels.

Die DE 202023000561 U1 betrifft eine Aufständerung für PV-Module.

Die DE 102006022870 A1 betrifft eine Befestigungsvorrichtung zur Anbringung von Gegenständen an einem Flachdach.

Die CH 720824 A1 betrifft eine Montageeinrichtung für PV-Module an Gebirgsflächen.

Die KR 20140036092 A betrifft eine schwimmende Struktur zur Installation eines Photovoltaikmoduls unter Verwendung eines einzelnen Trägerelements.

Die der Erfindung zu Grunde liegende Aufgabe besteht darin eine einfache und robuste Vorrichtung bereit zu stellen, die eine Montage von Solarpanels in unterschiedlicher Konfiguration (Länge, Breite der Fläche und Neigungswinkel der Solarpanels) ermöglicht.

Für das Lösen der Aufgabe wird eine Vorrichtung nach Anspruch 1 vorgeschlagen.

Eine Ausführungsvariante betrifft ein Vorrichtung zur Montage von Solarpanels wobei die Vorrichtung mehrere Querträger umfasst, wobei immer ein Paar von Querträgern an seinem oberen Ende über ein Scharniergelenk verbunden ist und die Querträger des Paares an ihren beiden unteren Enden über jeweils ein Scharniergelenk mit Befestigungselementen verbunden sind, wobei die unteren Enden der Querträger mit den Befestigungselementen an zwei parallelen Längsträgern befestigt sind, wobei der Neigungswinkel des Paares der Querträger über den Abstand der Längsträger vorgegeben ist, an dem das Paar befestigt ist, wobei mehrere Paare von Querträgern an wählbaren Position entlang der Längsträger befestigbar sind und wobei in Längsrichtung der Längsträger zumindest zwei Paare von Querträgern vorliegen, wobei an den zwei Paaren von Querträgern zwei Solarpanels befestigbar sind.

Die Querträger verlaufen quer, im Sinne von rechtwinkelig, zu den Längsträgern.

Bevorzugt wird, dass die Querträger jeweils ein U-Profil umfassen, das einen obenliegenden Grundschenkel umfasst, von dem beidseits ein vertikaler Schenkel nach unten abragt, wobei der Grundschenkel im oberen Endbereich eine Freistellung aufweist und wobei die beiden Querträger des Paares ident ausgeführt sind und versetzt mit deren vertikalen Schenkeln aneinander montiert sind.

Bevorzugt wird, dass die Befestigungselemente oberhalb der Längsträger vorliegen und die Befestigungselemente mit Befestigungsplatten unterhalb der Längsträger kombiniert sind, indem diese mit Bolzen aneinander befestigt sind, sodass diese an einer wählbaren Position entlang der Längsträger festklemmbar sind.

Bevorzugt wird, dass zwei unabhängige Befestigungselemente an den beiden Seiten des jeweiligen Querträgers vorliegen, wobei jedes dieser zwei unabhängigen Befestigungselemente mit einer eigenen Befestigungsplatte kombiniert und über zwei Bolzen verbunden ist.

Bevorzugt wird, dass die Längsträger mittels Befestigungsvorrichtungen an einem Gebäudedach oder Ballastelementen verschraubt sind, wobei die Längsträger zwischen obenliegenden Klemmelementen und untenliegenden Klemmelementen geklemmt sind.

Bevorzugt wird, dass zumindest mehrere der untenliegenden Klemmelemente in Form von Querverbindern vorliegen, welche zentral Befestigungsöffnungen aufweisen zur Anbringung an einer Befestigungsvorrichtung und beidseits davon je einen Bereich, an welchem ein Längsträger befestigbar ist, wobei optional Querverbinder in Form von Endverbindern vorliegen, bei welchen nur einer der beiden Bereiche zur Anbringung eines Längsträgers vorgesehen ist.

Bevorzugt wird, dass im Bereich abseits von Längsträgern Stege, insbesondere als Wartungswege, vorliegen, die entlang einer Reihe von Solarpanels quer über mehrere Querverbinder oder Endverbinder verlaufen und an diesen befestigt sind.

Bevorzugt wird, dass die Solarpanels mit Klemmwinkeln an den Querträgern befestigt sind.

Bevorzugt wird, dass von den Befestigungsvorrichtungen zumindest drei Gewindestangen emporragen, an welchen in einer ersten Variante das untenliegende Klemmelement und ein zu diesem gehörendes oberes Klemmelement befestigt sind, oder in einer zweiten Variante das untenliegende Klemmelement in Form eines Querverbinders oder Endverbindern befestigt ist, wobei die oberen Klemmelemente mit zusätzlichen Gewindebolzen am Querverbinder oder Endverbinder befestigt sind.

Bevorzugt wird, dass die Befestigungsvorrichtungen in Form von Beftec^{®} DRY.SYSTEM vorliegen.

Die Erfindung wird an Hand von Zeichnungen veranschaulicht:
- Fig. 1:: Zeigt die erfindungsgemäße Vorrichtung in drei unterschiedlichen Stellungen.
- Fig. 2:: Zeigt die erfindungsgemäße Vorrichtung bei direkter Montage von Längsträgern an Befestigungspunkten.
- Fig. 3:: Zeigt die erfindungsgemäße Vorrichtung bei Montage von Längsträgern an Querverbindern.
- Fig. 4:: Zeigt die Montage von Solarpaneelen an der Vorrichtung.
- Fig. 5:: Zeigt eine beispielhafte Solaranlage unter Verwendung der Vorrichtung.

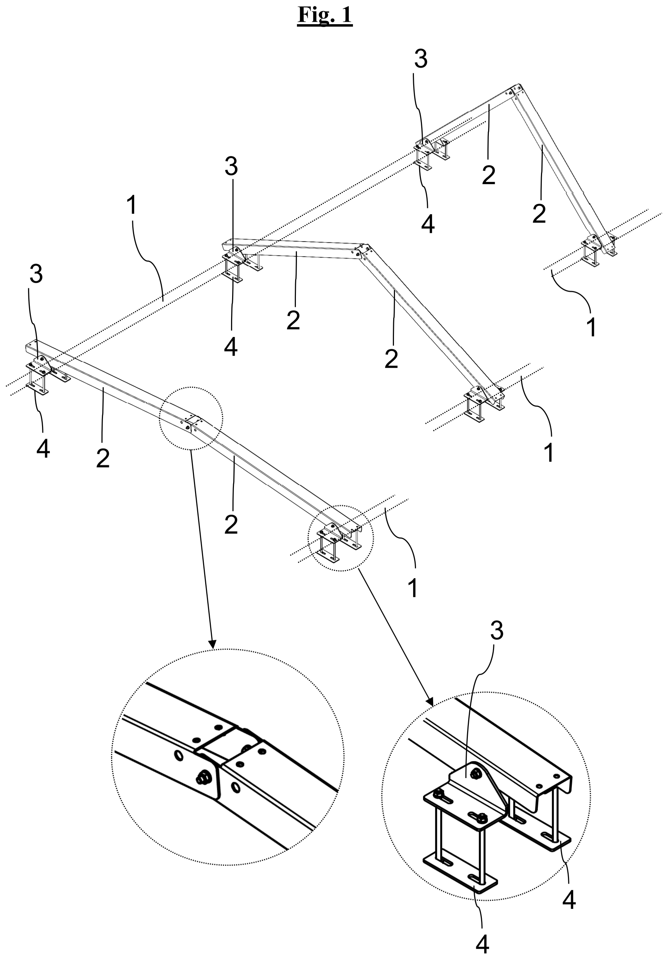

Wie in Fig. 1 veranschaulicht ist, sind die wesentlichen Elemente der Vorrichtung zwei Querträger 2, die an ihrem oberen Ende über ein Scharniergelenk verbunden sind und an ihren beiden unteren Enden über jeweils ein Scharniergelenk mit Befestigungselementen 3 verbunden sind. Mit den Befestigungselementen 3 werden die unteren Enden an Längsträgern 1 befestigt. Über den Abstand der benachbarten Längsträger 1 wird der Neigungswinkel der Querträger 2 vorgegeben.

Die Scharniergelenke bzw. die Lager der Scharniergelenke weisen bevorzugt dämpfende Elemente, wie vorgespannte Federn, auf, um Schwingungen aufzunehmen.

Die Querträger 2 sind bevorzugt durch U-Profile gebildet, die einen obenliegenden Grundschenkel umfassen, von dem beidseits ein vertikaler Schenkel nach unten abragt. Im oberen Endbereich weist der Grundschenkel eine Freistellung auf. Die beiden Querträger 2 sind bevorzugt ident ausgeführt und versetzt mit deren vertikaler Schenkel aneinander montiert. Bevorzugt sind die beiden dabei aneinanderliegenden vertikaler Schenkel jeweils durch einen Bolzen verbunden. Am unteren Ende, also bei den Befestigungselementen 3, können die vertikalen Schenkel eine Freistellung aufweisen.

Bevorzugt sind die beiden vertikalen Schenkel eines Querträgers 2 durch einen Bolzen mit je einem Befestigungselement 3 verbunden. Die Befestigungselemente 3 weisen bevorzugt keine Verbindung zueinander auf. Die Befestigungselemente 3 umfassen jeweils einen vertikalen Schenkel, an welchem ein Loch für die Bolzenverbindung vorliegt und einen horizontalen Schenkel, an welchem zwei Löcher, insbesondere Langlöcher, vorliegen. Die Befestigungselemente 3 sind bevorzugt mit Befestigungsplatten 4 kombiniert. Die Befestigungselemente 3 liegen oberhalb der Längsträger 1 vor und die Befestigungsplatten 4 unterhalb der Längsträger 1. Durch Bolzen sind die Befestigungselemente 3 und die Befestigungsplatten 4 miteinander verbunden, sodass diese an einer wählbaren Position entlang der Längsträger 1 festklemmbar sind. Diese Klemmverbindung bewirkt, dass eine Wärmeausdehnung der Komponenten Längsträger 1 und Solarpanels 12 möglich ist.

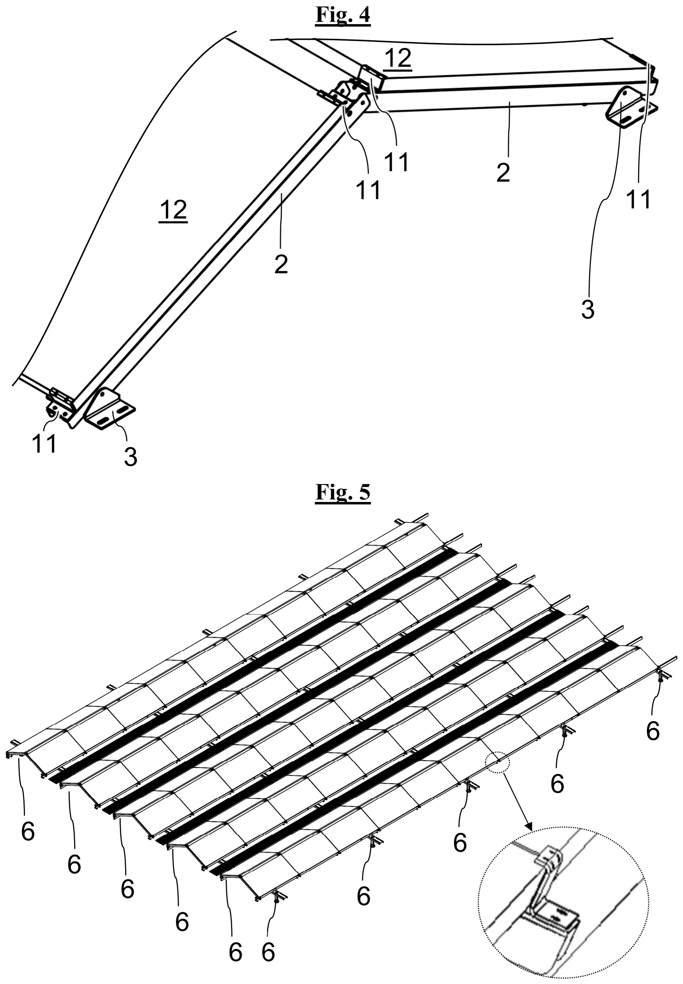

Die Querträger 2 weisen am oberen und unteren Endbereich Befestigungsmittel zur Befestigung von Solarpanels 12 auf, welche besonders bevorzugt als Löcher zur Verschraubung von Befestigungswinkeln 11 vorliegen, siehe Fig. 4. Die Befestigungswinkel 11 drücken das Solarpaneel 12 an die beiden Querträger 2 an. An den oberen Schenkeln der Befestigungswinkel 11 können Wurmschrauben vorliegen, die gegen das Solarpaneel 12 verschraubt werden können.

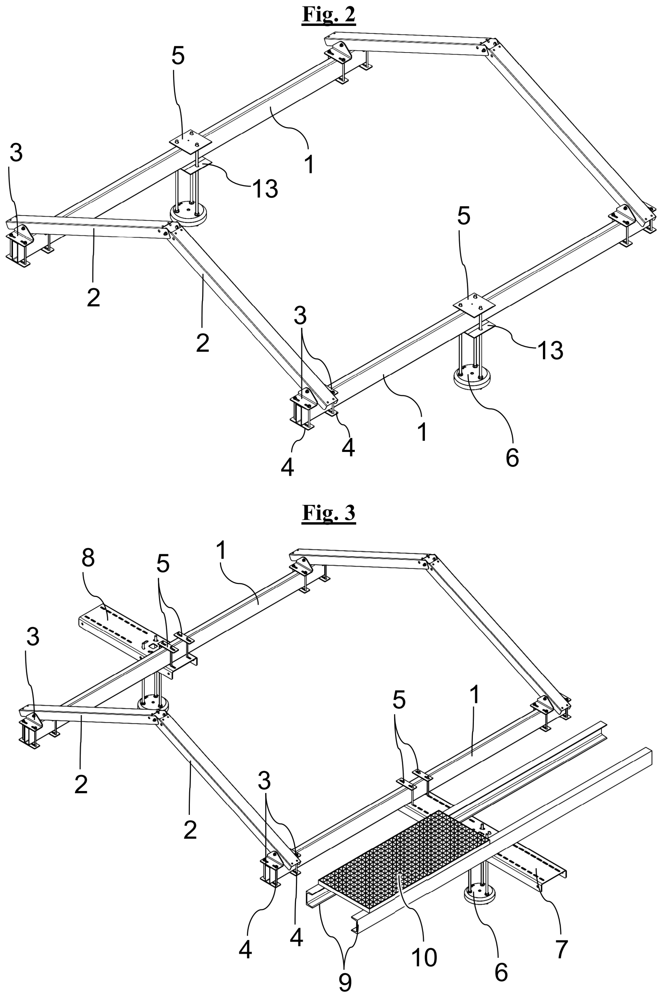

Die Längsträger 1 sind bevorzugt Profilelemente, bevorzugt Profilrohre. Die Längsträger 1 können, wie in den Fig. 2 und 3 veranschaulicht ist, als Rohre mit rechteckigem Querschnitt vorliegen.

In einer bevorzugten Variante sind die Längsträger 1 mit dem Untergrund verbunden, insbesondere verschraubt, wie in den Fig. 3 und 4 veranschaulicht ist. Weniger bevorzugt können die Längsträger auch mit Ballast beschwert werden, oder selbst als Ballastelemente ausgeführt sein.

Die in den Fig. 2 und 3 dargestellten Befestigungsvorrichtungen 6 sind aus der EP 2 888 538 B1 bekannt. Diese sind unter der Bezeichnung Beftec^{®} DRY.SYSTEM erhältlich. Die Verwendung dieser Befestigungsvorrichtungen 6 ist zwar vorteilhaft, die Verwendung anderer Befestigungsvorrichtungen 6 ist aber nicht ausgeschlossen.

Bevorzugt erfolgt die Befestigung der Längsträger 1 an der darunterliegenden Struktur mit Klemmelementen 5, die oberhalb und unterhalb des Längsträgers 1 vorliegen. Die Klemmelementen 5 liegen versetzt zu den Befestigungselementen 3 vor.

Wie in Fig. 2 dargestellt können die Längsträger 1 direkt an den Befestigungsvorrichtungen 6 montiert sein. In einer bevorzugten Variante ragen von der Befestigungsvorrichtungen 6 dazu zumindest drei Gewindestangen nach oben, an welchen die Klemmelemente 5 und 13 vorliegen. Unterhalb des unteren Klemmelementes 13 liegen gesicherte Muttern vor und oberhalb des oberen Klemmelements 5 liegen ebenfalls gesicherte Muttern vor. Dadurch ist die Höhe der Längsträger 1 relativ zur Befestigungsvorrichtung 6 einstellbar. Auch eine Neigung kann vorgegeben oder ausgeglichen werden. Die Gewindestangen liegen beidseits des Längsträgers 1 vor.

Die Variante der Fig. 4 ist ähnlich, jedoch ist das untere Klemmelement als Querverbinder 7 ausgeführt. Der Längsträger 1 ist zwischen einem oder zwei oberen Klemmelementen 5 und dem Querverbinder 7 geklemmt, indem diese mit Gewindebolzen verschraubt sind. Die Gewindebolzen liegen beidseits des Längsträgers 1 vor. Bevorzugt sind vier Gewindebolzen vorhanden. Der Querverbinder 7 erstreckt sich vom Längsträger 1 weg und weist in einem Abstand zu den Klemmelementen 5 mehrere Befestigungsöffnungen zur Anbringung an einer Befestigungsvorrichtung 6 auf. Die Befestigungsvorrichtung 6 kann wie zu Fig. 2 beschrieben vorliegen. Am den Klemmelementen 5 gegenüberliegenden Ende kann ein weiterer Längsträger 1 mit Klemmelementen 5 am Querverbinder 7 befestigt werden. Der Querverbinder 7 weist bevorzugt zwei Reihen von Langlöchern auf, um den Neigungswinkel der Querträger 2 in einem gewissen Bereich variieren zu können. In einer anderen Ausführungsvariante kann an den Querverbindern 7 eine Führung vorliegen, entlang welcher die Längsträger 1 verschiebbar sind. Eine solche Verschiebung kann manuell oder automatisiert erfolgen, beispielsweise durch Motoren, Hubzylinder, Seilzüge und/oder Kurbelantriebe. An den Außenkanten einer Solarfläche kann eine zweite Art von Querverbindern 7 in Form von Endverbindern 8 vorliegen, welche anschließend an die mehreren Befestigungsöffnungen zur Anbringung an einer Befestigungsvorrichtung 6 einen kürzeren und einen längeren Abschnitt aufweist. Anstelle von Langlochreihen können am kürzeren Abschnitt lediglich vier Langlöcher vorliegen. Die Querverbinder 7 und Endverbinder 8 sind bevorzugt U-Profile mit einem horizontalen Basisschenkel, von welchem beidseits ein vertikaler Schenkel nach unten abragt. Im Bereich zwischen den Längsträgern 1 können beim Querverbinder 7 und/oder im auskragenden Bereich des Endverbinders 8 vorteilhaft Stege montiert sein. Diese Stege können beispielsweise durch Träger 9 und Trittgitter 10 gebildet sein und können als Wartungswege dienen. An den Querverbindern 7 und/oder im auskragenden Bereich der Endverbinder 8 können auch Geländer oder Absturzsicherungen befestigt werden.

In Fig. 5 ist schließlich noch eine beispielhafte Solaranlage dargestellt, welche als Photovoltaik- oder Solarthermieanlage vorliegen kann. Jeweils eine Doppel-Reihe von Solarpanels 12 liegt zwischen zwei parallelen Längsträgern 1 vor. Je nach Länge der Reihe kann der Längsträger 1 durch ein einzelnes Profilelement gebildet sein, oder aus mehreren Profilelement zusammengestückelt sein. Die Verbindung der Profilelemente erfolgt bevorzugt durch Verbindungselemente, die einen Längenausgleich ermöglich. Beispielsweise können Verbindungselemente innen in Profilelemente in Form von Profilrohren eingesteckt werden. Jedes Solarpanel 12 liegt an zwei Querträgern 2 vor. Bei den auf Stoß liegenden Solarpanels 12 sind die Randbereiche von zwei benachbarten Solarpanels 12 an einem Querträger 2 befestigt. Dies erfolgt bevorzugt indem, wie in der Detailansicht der Fig. 5 veranschaulicht, die Klemmwinkel 11 die Randbereiche zweier Solarpanels 12 befestigen. Die Anzahl und Lage der Querverbinder 7, Endverbinder 8 und Befestigungselemente 6 ist unabhängig von der Anzahl der Solarpanels 12 und wird je nach statischen Anforderungen gewählt. Dabei ist es nicht notwendig die Querverbinder 7, wie dargestellt, entlang von durchgehenden Linien anzuordnen.

Je nach Stabilität der Solarpanels 12 kann es erforderlich sein zusätzlich Stützelemente vorzusehen, welche unterhalb des Solarpanels 12 zwischen den Querträgern 2 verlaufen, um ein Durchhängen zu verhindern.

Anders als in den Figuren dargestellt können die beiden Längsträger 1 eines Paares von Querträgern 2 auch auf unterschiedlichen Ebenen vorliegen. Für den Fall, dass die Längsträger 1 eines Paares von Querträgern 2 auf derselben Ebene liegen, schließen die Querträger 2 des Paares den selben Winkel zur Horizontalen ein und sind dachförmig in entgegengesetzte Richtungen geneigt. In Fig. 1 betragen die Neigungswinkel zur Horizontalen beispielsweise 5, 25 und 45 Grad.

Die hierin erwähnten Bolzen und Bolzenverbindungen können ausgeführt sein, indem ein Bolzen durch zwei Bohrungen oder Langlöcher gesteckt ist und mit einer Mutter gekontert wird. Alternativ können die Bolzen in eine Blindnietmutter oder eine angeschweißte Mutter eingeschraubt werden, die bereits mit einem der Elemente verbunden ist. Das Anschweißen von Bolzen oder Gewindestangen, soll als eine wenig bevorzugte weitere Option erwähnt sein.

## Patentansprüche

1. Vorrichtung zur Montage von Solarpanels (12), **dadurch gekennzeichnet, dass** die Vorrichtung mehrere Querträger (2) umfasst, wobei immer ein Paar von Querträgern (2) an seinem oberen Ende über ein Scharniergelenk verbunden ist und die Querträger (2) des Paares an ihren beiden unteren Enden über jeweils ein Scharniergelenk mit Befestigungselementen (3) verbunden sind, wobei die unteren Enden der Querträger (2) mit den Befestigungselementen (3) an zwei parallelen Längsträgern (1) befestigt sind, wobei die Querträger (2) quer zu den Längsträgern (1) verlaufen, wobei der Neigungswinkel des Paares der Querträger (2) über den Abstand der Längsträger (1) vorgegeben ist, an dem das Paar befestigt ist, wobei mehrere Paare von Querträgern (2) an wählbaren Positionen entlang der Längsträger (1) befestigbar sind und wobei in Längsrichtung der Längsträger (1) zumindest zwei Paare von Querträgern (2) vorliegen, wobei an den zwei Paaren von Querträgern (2) zwei Solarpanels (12) befestigbar sind.

2. Vorrichtung nach Anspruch 1, **dadurch gekennzeichnet, dass** die Querträger (2) jeweils ein U-Profil umfassen, das einen obenliegenden Grundschenkel umfasst, von dem beidseits ein vertikaler Schenkel nach unten abragt, wobei der Grundschenkel im oberen Endbereich eine Freistellung aufweist und wobei die beiden Querträger (2) des Paares ident ausgeführt und versetzt mit deren vertikalen Schenkeln aneinander montiert sind.

3. Vorrichtung nach Anspruch 1 oder 2, **dadurch gekennzeichnet, dass** die Befestigungselemente (3) oberhalb der Längsträger (1) vorliegen und die Befestigungselemente (3) mit Befestigungsplatten (4) unterhalb der Längsträger (1) kombiniert sind, indem diese mit Bolzen aneinander befestigt sind, sodass diese an einer wählbaren Position entlang der Längsträger (1) festklemmbar sind.

4. Vorrichtung nach Anspruch 3, **dadurch gekennzeichnet, dass** zwei unabhängige Befestigungselemente (3) an den beiden Seiten des jeweiligen Querträgers (2) vorliegen, wobei jedes dieser zwei unabhängigen Befestigungselemente (3) mit einer eigenen Befestigungsplatte (4) kombiniert und über zwei Bolzen verbunden ist.

5. Vorrichtung nach einem der Ansprüche 1 bis 4, **dadurch gekennzeichnet, dass** die Längsträger (1) mittels Befestigungsvorrichtungen (6) an einem Gebäudedach verschraubt sind, wobei die Längsträger (1) zwischen obenliegenden Klemmelementen (5) und untenliegenden Klemmelementen (13, 7, 8) geklemmt sind.

6. Vorrichtung nach Anspruch 5, **dadurch gekennzeichnet, dass** zumindest mehrere der untenliegenden Klemmelemente (13, 7, 8) in Form von Querverbindern (7) vorliegen, welche zentral Befestigungsöffnungen aufweisen zur Anbringung an einer Befestigungsvorrichtung (6) und beidseits davon je einen Bereich, an welchem ein Längsträger (1) befestigbar ist, wobei optional Querverbinder (7) in Form von Endverbindern (8) vorliegen, bei welchen nur einer der beiden Bereiche zur Anbringung eines Längsträgers (1) vorgesehen ist.

7. Vorrichtung nach Anspruch 6, **dadurch gekennzeichnet, dass** im Bereich abseits von Längsträger (1) Stege, insbesondere als Wartungswege, vorliegen, die entlang einer Reihe von Solarpanels (12) quer über mehrere Querverbinder (7) oder Endverbinder (8) verlaufen und an diesen befestigt sind.

8. Vorrichtung nach einem der Ansprüche 5 bis 7, **dadurch gekennzeichnet, dass** von den Befestigungsvorrichtungen (6) zumindest drei Gewindestangen emporragen, an welchen in einer ersten Variante das untenliegende Klemmelement (13) und ein zu diesem gehörendes oberes Klemmelement (5) befestigt sind, oder in einer zweiten Variante das untenliegende Klemmelement (13) in Form eines Querverbinders (7) oder Endverbindern (8) befestigt ist, wobei die oberen Klemmelemente (5) mit zusätzlichen Gewindebolzen am Querverbinder (7) oder Endverbinder (8) befestigt sind.

9. Vorrichtung nach Anspruch 8, **dadurch gekennzeichnet, dass** die Befestigungsvorrichtungen (6) in Form der in EP 2 888 538 B1 beschriebenen Befestigungsvorrichtung vorliegen.

10. Vorrichtung nach einem der Ansprüche 1 bis 9, **dadurch gekennzeichnet, dass** die Solarpanels (12) mit Klemmwinkeln (11) an den Querträgern (2) befestigt sind.
